# EUROPEAN PATENT SPECIFICATION

(11) **EP 4 254 095 B1**
(45) Date of publication and mention of the grant of the patent: **06.08.2025**
(21) Application number: 23162566.6
(22) Date of filing: 17.03.2023
(51) Int. Cl.: G05B 19/042

(54) **CONTROL SYSTEM, CONTROL DEVICE, CONTROL METHOD, AND CONTROL PROGRAM**
STEUERUNGSSYSTEM, STEUERUNGSVORRICHTUNG, STEUERUNGSVERFAHREN UND STEUERUNGSPROGRAMM
SYSTÈME DE COMMANDE, DISPOSITIF DE COMMANDE, PROCÉDÉ DE COMMANDE ET PROGRAMME DE COMMANDE

(30) Priority: 01.04.2022 JP 2022061751
(43) Date of publication of application: 04.10.2023
(73) Proprietor: OMRON Corporation, Shiokoji-dori, Shimogyo-ku Kyoto-shi Kyoto 600-8530 (JP)
(72) Inventor: NAMIE, Masaki, Kyoto-shi, Kyoto, 6008530 (JP)
(74) Representative: Bardehle Pagenberg Partnerschaft mbB Patentanwälte Rechtsanwälte

(56) References cited:
- EP-A1- 2 840 449
- WO-A1-2014/124701
- US-A1- 2012 253 597
- US-A1- 2019 215 254
- HUI XIE ET AL: "Visual servoing with modified Smith predictor for micromanipulation tasks", MECHATRONICS AND AUTOMATION, 2005 IEEE INTERNATIONAL CONFERENCE NIAGARA FALLS, ON, CANADA JULY 29-AUG 1, 2005, PISCATAWAY, NJ, USA,IEEE, vol. 1, 29 July 2005 (2005-07-29), pages 71 - 76, XP010913313, ISBN: 978-0-7803-9044-7

## Description

### CROSS-REFERENCE TO RELATED APPLICATION

This application is based on Japanese Patent Application No. 2022-061751 filed with the Japan Patent Office on April 1, 2022.

### FIELD

The present invention relates to a control system, a control device, a control method, and a control program.

### BACKGROUND

In the technical field of factory automation, feedback control of a target device such as a servomotor is performed on the basis of a value measured by a sensor. Here, in a case where there is a time difference between when an input is given to the target device and when an output corresponding to the input appears, the feedback control loop has dead time. For example, a dead time may occur in a case where the devices are connected by relatively low-speed wired communication or wireless communication or in a case where measurement is performed by a sensor at a tip of a conveyance device such as a belt conveyor.

When the dead time varies, the feedback control may not be appropriately performed. In this regard, for example, WO 2018/034191 A describes a remote control system that calculates an upper limit value of a delay amount from a history of the delay amount in order to suppress a variation in the delay amount due to dead time, sets the upper limit value as a delay setting value, and transmits control data to a control target when a time corresponding to the delay setting value has elapsed after the control data (operation amount) is created.

Furthermore, Japanese Patent Application Laid-Open No. 2012-222403 describes a control system that adjusts a timing such that generation of control data is started at a point of time when a maximum delay time has elapsed from a point of time when measurement data is transmitted from a sensor device in order to stably execute a control loop.

Meanwhile, in the remote control system described in WO 2018/034191 A and the control system described in Japanese Patent Application Laid-Open No. 2012-222403, both a transmission side and a reception side use time information when generating each data. That is, both the transmission side and the reception side need a clock function.
EP 2 840 449 A1 relates to a controller and a control system that control a controlled object via a network.
US 2019/215254 A1 relates to a remote control device, a system, a method, and a recording medium for remotely controlling a control target device.
US 2012/253597 A1 relates to an information display system comprising an on-board device for controlling multiple in-vehicle apparatuses and a portable device including a portable display.

### SUMMARY

The present invention has been made in view of such circumstances, and an object of the present invention is to provide a control system, a control device, a control method, and a control program that enable stable control without using a clock function even in a case where a delay time varies.
The object of the invention is achieved by the subject-matter of the independent claims. Advantageous embodiments are defined in the dependent claims. Further examples are provided for facilitating the understanding of the invention.

A control system according to one aspect of the present invention includes: a sensor configured to measure a physical quantity of a target device controlled based on a control signal; a sensor driver configured to add a transmission sequence number incremented for each control cycle to the physical quantity, and transmit the physical quantity; and a control device configured to transmit the control signal to the target device based on the physical quantity and a command value, and perform feedback control. The control device includes: a receiver configured to receive the physical quantity to which the transmission sequence number is added; a buffer unit configured to hold an array configured with a number of elements determined based on a maximum value of a number of delay periods with which the physical quantity is delayed and received in a control cycle; a control unit configured to generate the control signal based on the physical quantity and the command value; and a transmitter configured to transmit the generated control signal to the target device. The control unit is configured to increment a reception sequence number, which is initialized to 0 before starting processing, for each control cycle, store the physical quantity at a storage position of an array determined based on the transmission sequence number added to the received physical quantity and the reception sequence number, generate the control signal based on the physical quantity stored in a storage position for control among storage positions of the array, and the command value, and shift each element stored in the array one by one in a direction in which an index value is large after the control signal is transmitted by the transmitter.

According to this aspect, it is possible to hold the array of the number of elements determined on the basis of the maximum value of the delay period number, receive the physical quantity to which the transmission sequence number is added for each control cycle, increment the reception sequence number, store the received physical quantity in a storage position of an array determined on the basis of the transmission sequence number and the reception sequence number of the received physical quantity, further generate the control signal on the basis of the physical quantity stored in a storage position for control among storage positions of the array and the command value, and transmit the control signal to the target device.

In the above aspect, the number of elements may be a value obtained by adding 1 to a value obtained by subtracting a minimum value of the number of delay periods from a maximum value of the number of delay periods.

In the above aspect, the storage position of the array may be a storage position corresponding to a value obtained by further subtracting a minimum value of the number of delay periods from a value obtained by subtracting the transmission sequence number from the reception sequence number.

In the above aspect, the storage position for control of the array may be a storage position corresponding to a value obtained by subtracting a minimum value of the number of delay periods from a maximum value of the number of delay periods.

In the above aspect, the control unit shifts each element stored in the array one by one in a direction in which an index value is large after the control signal is transmitted by the transmitter.

In the above aspect, the control device may further include a Smith compensator based on a model of the target device and dead time, and the dead time determined based on a maximum value of the number of delay periods may be set in the Smith compensator.

A control method according to another aspect of the present invention is a control method in a control device configured to transmit a control signal to a target device based on a physical quantity of the target device measured by a sensor and a command value, and perform feedback control, the control method including: receiving the physical quantity to which a transmission sequence number incremented for each control cycle is added in a sensor driver; holding an array of a number of elements determined based on a maximum value of a number of delay periods with which the physical quantity is delayed and received in a control cycle; generating the control signal based on the physical quantity and the command value; and transmitting the generated control signal to the target device, in which the generating the control signal includes: incrementing a reception sequence number, which is initialized to 0 before starting processing, for each control cycle; storing the physical quantity at a storage position of an array determined based on the transmission sequence number added to the received physical quantity and the reception sequence number; generating the control signal based on the physical quantity stored in a storage position for control among storage positions of the array, and the command value; and each element stored in the array is shifted one by one in a direction in which an index value is large after the control signal is transmitted.

According to this aspect, it is possible to hold the array of the number of elements determined on the basis of the maximum value of the delay period number, receive the physical quantity to which the transmission sequence number is added for each control cycle, increment the reception sequence number, store the received physical quantity in a storage position of an array determined on the basis of the transmission sequence number and the reception sequence number of the received physical quantity, further generate the control signal on the basis of the physical quantity stored in a storage position for control among storage positions of the array and the command value, and transmit the control signal to the target device.

A control program according to another aspect of the present invention causes a control device configured to transmit a control signal to a target device based on a physical quantity of the target device measured by a sensor and a command value and perform feedback control to function as: a receiver configured to receive the physical quantity to which a transmission sequence number incremented for each control cycle is added in a sensor driver; a buffer unit configured to hold an array of a number of elements determined based on a maximum value of a number of delay periods with which the physical quantity is delayed and received in a control cycle; a control unit configured to generate the control signal based on the physical quantity and the command value; and a transmitter configured to transmit the generated control signal to the target device, in which the control unit is configured to increment a reception sequence number, which is initialized to 0 before starting processing, for each control cycle, store the physical quantity at a storage position of an array determined based on the transmission sequence number added to the received physical quantity and the reception sequence number, generate the control signal based on the physical quantity stored in a storage position for control among storage positions of the array, and the command value, and shift each element stored in the array one by one in a direction in which an index value is large after the control signal is transmitted by the transmitter.

According to this aspect, it is possible to hold the array of the number of elements determined on the basis of the maximum value of the delay period number, receive the physical quantity to which the transmission sequence number is added for each control cycle, increment the reception sequence number, store the received physical quantity in a storage position of an array determined on the basis of the transmission sequence number and the reception sequence number of the received physical quantity, further generate the control signal on the basis of the physical quantity stored in a storage position for control among storage positions of the array and the command value, and transmit the control signal to the target device.

According to the present invention, it is possible to provide a control system, a control method, and a control program that enable stable control without using a clock function even in a case where a delay time varies.

### BRIEF DESCRIPTION OF THE DRAWINGS

Fig. 1 is a diagram illustrating a network configuration of a control system according to an embodiment;
Fig. 2 is a schematic diagram illustrating a configuration of an array PV(i);
Figs. 3A to 3C are schematic diagrams illustrating a procedure when physical quantities are aligned using the array PV(i);
Fig. 4 is a schematic diagram illustrating a modified example of the array PV(i);
Fig. 5 is a control block diagram of the control system according to the embodiment;
Fig. 6 is a diagram illustrating a modified example of control blocks of the control system;
Fig. 7 is a diagram illustrating a physical configuration of the control device according to the embodiment;
Fig. 8 is a flowchart of control processing executed by a sensor driver of the control system according to the embodiment;
Fig. 9 is a flowchart of control processing executed by the control device of the control system according to the embodiment;
Fig. 10 is a diagram illustrating transition of the number of delay periods of a control signal or a physical quantity at the time of simulation;
Fig. 11A is a diagram illustrating a position of a target device controlled by the control device according to the embodiment in the simulation;
Fig. 11B is a diagram illustrating an error between a position controlled by the control device according to the embodiment and a command value in the simulation;
Fig. 11C is a diagram illustrating a thrust controlled by the control device according to the embodiment in the simulation;
Fig. 12A is a diagram illustrating a position of a target device controlled by a control device according to a comparative example in the simulation;
Fig. 12B is a diagram illustrating an error between a position controlled by the control device according to the comparative example and a command value in the simulation;
0Fig.12C is a diagram illustrating a thrust controlled by the control device according to the comparative example in the simulation;
Fig. 13A is a diagram illustrating a position of a target device in a case where alignment processing is performed even for a delay of a control signal by a control device according to a modified example in the simulation;
Fig. 13B is a diagram illustrating an error between a position and a command value in a case where alignment processing is performed even for a delay of the control signal by the control device according to the modified example in the simulation; and
Fig. 13C is a diagram illustrating a thrust in a case where alignment processing is performed also for a delay of the control signal by the control device according to the modified example in the simulation.

### DETAILED DESCRIPTION

A preferred embodiment of the present invention will be described with reference to the accompanying drawings. Note that, in the respective drawings, components denoted by the same reference signs have the same or similar configurations.

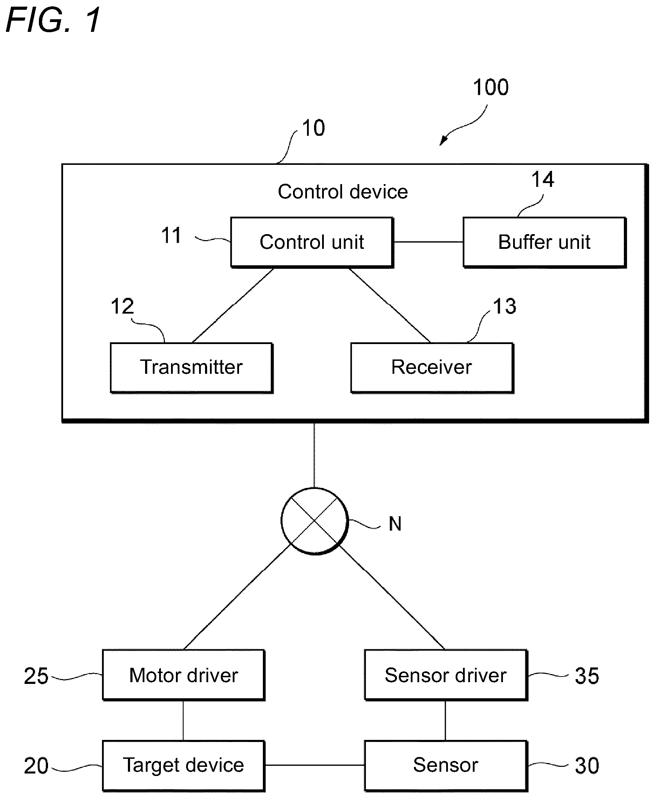

Fig. 1 is a diagram illustrating a network configuration of a control system 100 according to an embodiment of the present invention. The control system 100 includes a target device 20 controlled on the basis of a control signal, a sensor 30 that measures a physical quantity of the target device 20, and a control device 10 that transmits the control signal to the target device 20 on the basis of the physical quantity measured by the sensor 30 and a command value to perform feedback control.

The target device 20 may be any device that is controlled on the basis of the control signal. Hereinafter, for the sake of concrete explanation, a device that controls a position of a movable part by a servomotor is assumed as the target device 20. In this case, the command value is a target value related to the position of the movable part, and the control signal is a thrust (torque) of the servomotor.

The sensor 30 may measure an arbitrary physical quantity related to the target device 20. For example, in a case where the target device 20 is a device that controls the position of the movable part, the sensor 30 may measure the position of the movable part.

The control device 10, the target device 20, and the sensor 30 are communicably connected to each other by a communication network N. The communication network N may be a network of wired communication or wireless communication, for example, a communication network conforming to a standard such as EtherNet/IP or EtherCAT (registered trademark), or a communication network using the local 5G.

The control system 100 further includes a motor driver 25 and a sensor driver 35. The motor driver 25 is a device driver for controlling the target device 20, and the sensor driver 35 is a device driver for controlling the sensor 30. The motor driver 25 and the sensor driver 35 may be provided separately from the target device 20 and the sensor 30, or may be installed in the target device 20 and the sensor 30.

The sensor driver 35 further adds a transmission sequence number to the data of the physical quantity measured in each control cycle by the sensor 30, and transmits the data to the control device 10. The transmission sequence number is a number that is incremented for each control cycle of the sensor 30.

The control device 10 includes, for example, a control unit 11, a transmitter 12, a receiver 13, and a buffer unit 14 as a functional configuration.

The transmitter 12 transmits a control signal generated by the control unit 11 to the target device 20. The receiver 13 receives the data of the physical quantity to which the transmission sequence number is added.

The buffer unit 14 holds an array including a specific number of elements. The number of elements constituting the array can be determined on the basis of the minimum value and the maximum value of the number of delay periods generated when the physical quantity is received. For example, a value obtained by adding 1 to a value obtained by subtracting the minimum value of the number of delay periods from the maximum value of the number of delay periods is preferably determined as the number of elements of the array. Note that in a case where the minimum value of the number of delay periods is unknown, the minimum value of the number of delay periods may be set to 1 or 0, and either the maximum value of the number of delay periods or a value obtained by adding 1 to the maximum value of the number of delay periods may be defined as the number of elements of the array.

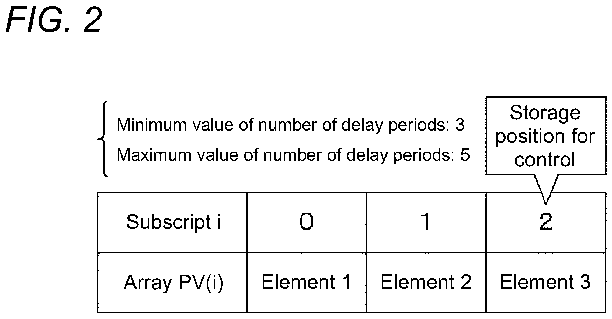

A specific description will be given with reference to Fig. 2. As illustrated in the drawing, in a case where the minimum value of the number of delay periods is 3 and the maximum value of the number of delay periods is 5, the number of elements constituting an array PV(i) is 5 - 3 + 1 = 3.

The control unit 11 illustrated in Fig. 1 generates a command value so as to reduce a deviation of the physical quantity from a target value. In a case where the control target of the control device 10 is a position of the movable part of the target device 20, the target value and the command value are values related to the position.

The control unit 11 generates a control signal for controlling the target device 20 on the basis of the physical quantity of the target device 20 measured by the sensor 30 and the command value. For example, in a case where the target device 20 is a device that controls the position of the movable part by a servomotor, the control signal is a signal that controls a thrust (torque) of the servomotor.

The control unit 11 increments a reception sequence number for each control cycle. The control unit 11 stores the physical quantity received by the receiver 13 at a specific position in the array of the buffer unit 14. The position where the physical quantity is stored can be determined on the basis of the transmission sequence number and the reception sequence number added to the received physical quantity. For example, it is preferable to store the received physical quantity at a position corresponding to a value obtained by further subtracting the minimum value of the number of delay periods from a value obtained by subtracting the transmission sequence number from the reception sequence number.

A specific description will be given with reference to Fig. 2. As illustrated in the drawing, in the array PV(i) to which three subscripts (indexes) from 0 to 2 are allocated, for example, in a case where the transmission sequence number added to the received physical quantity is 1, the reception sequence number is 4, and the minimum value of the number of delay periods is 3, a position where the received physical quantity is stored is the position of [reception sequence number] 4 - [transmission sequence number] 1- [minimum value of the number of delay periods] 3 = 0, that is, the position of the array PV(0) having the subscript of 0.

The control unit 11 illustrated in Fig. 1 generates a control signal on the basis of the physical quantity stored in the storage position for control among the storage positions of the array, and the command value. The storage position for control is a storage position where a physical quantity for control is stored, and can be determined based on the minimum value and the maximum value of the number of delay periods. For example, a storage position corresponding to a value obtained by subtracting the minimum value of the number of delay periods from the maximum value of the number of delay periods is preferably set as the storage position for control.

A specific description will be given with reference to Fig. 2. As illustrated in the drawing, in a case where the minimum value of the number of delay periods is 3 and the maximum value of the number of delay periods is 5, the storage position for control is a position of [maximum value of the number of delay periods] 5 - [minimum value of the number of delay periods] 3 = 2, that is, a position of the array PV(2) having a subscript of 2.

After the control signal is transmitted by the transmitter 12, the control unit 11 illustrated in Fig. 1 shifts each element stored in the array one by one in a direction in which the subscript is large. Note that the control signal is transmitted in each control cycle.

A specific description will be given with reference to Fig. 2. As illustrated in the drawing, in a case where an element 1 is stored in an array PV(0), an element 2 is stored in an array PV(1), and an element 3 is stored in an array PV(2), when a control signal is transmitted, the element 1 stored in the array PV(0) is stored in the array PV(1), and the element 2 stored in the array PV(1) is stored in the array PV(2). At that time, it is preferable to store an initial value in the array PV(0). The initial value may be any value as long as the value can be distinguished from the physical quantity. For example, NA (NoAvailable) may be used as the initial value.

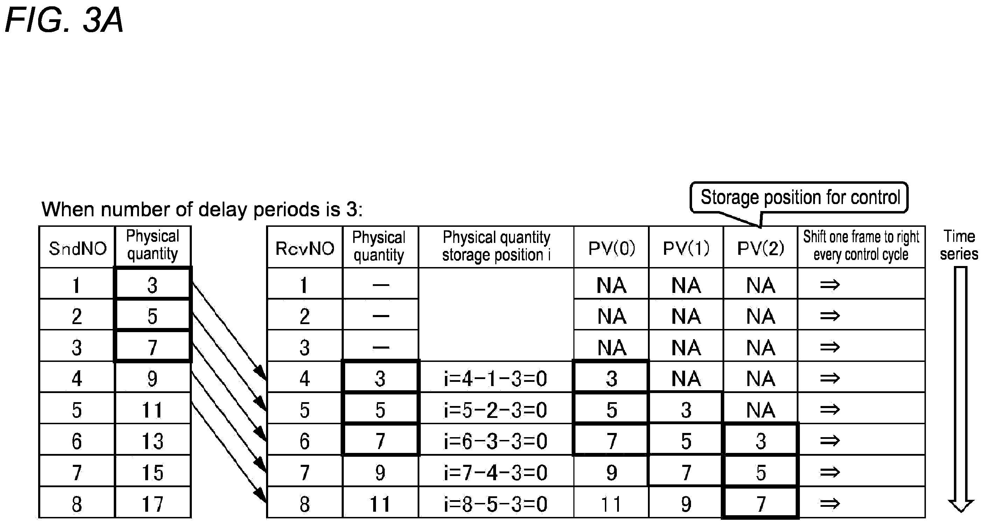

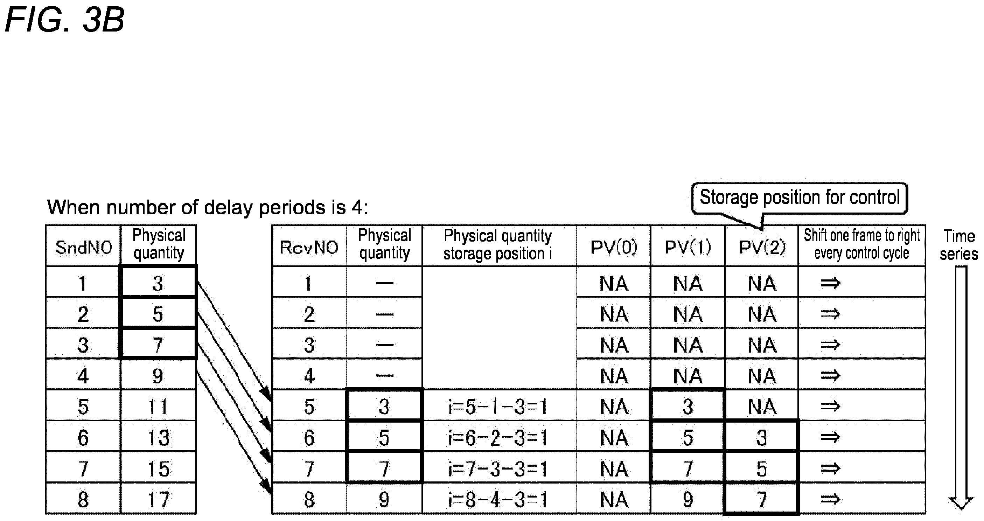

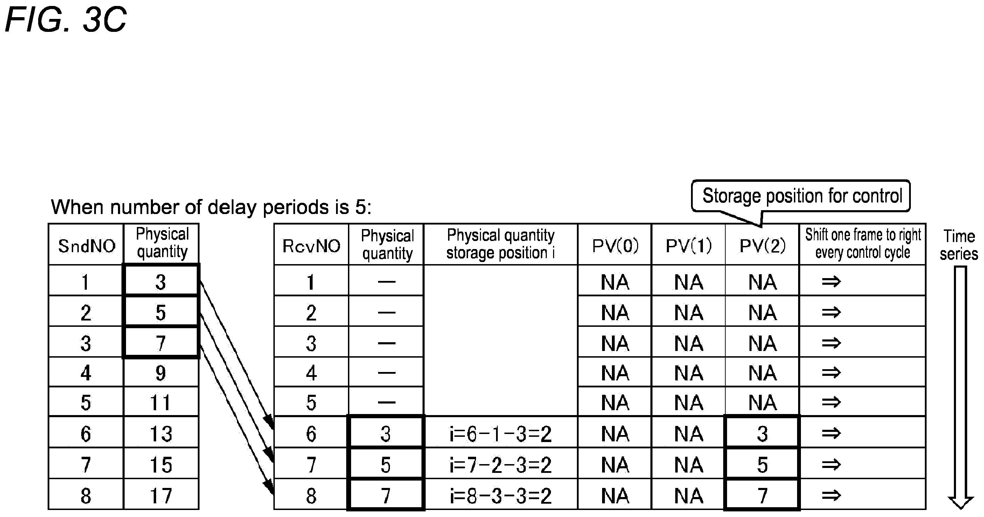

With reference to Fig. 3, a procedure when the control unit 11 aligns the physical quantities received from the sensor driver 35 using the array PV(i) will be specifically described.

Similarly to Fig. 2, Fig. 3 is a conceptual processing diagram illustrating an example in which the minimum value of the number of delay periods is 3, the maximum value of the number of delay periods is 5, the number of elements of the array PV(i) is 3, and a storage position for control is the position of the array PV(2).

Fig. 3A is a conceptual processing diagram when the number of delay periods is 3, Fig. 3B is a conceptual processing diagram when the number of delay periods is 4, and Fig. 3C is a conceptual processing diagram when the number of delay periods is 5.

In each drawing, it is assumed that the processing proceeds while shifting to a lower row by one row for each control cycle. The transmission sequence number SndNO and the reception sequence number RcvNO are initialized to 0 at the start of the processing, and are incremented for each control cycle after the start of the processing. Each element of the array PV(i) that stores a physical quantity is initialized to NA at the start of the processing, and is also initialized to NA in a case where an element of a shift source is empty when each element of the array is shifted to a right side (a side with a larger subscript) by one frame.

In Fig. 3A, since the number of delay periods is 3, when the reception sequence number RcvNO corresponding to the fourth control cycle becomes 4, the physical quantity "3" transmitted when the transmission sequence number SndNO is 1 is received. At this time, a position where the physical quantity is stored is the position of the array PV(o) from [RcvNO] 4 - [SndNO] 1 - [minimum value of the number of delay periods] 3 = 0. Therefore, the received physical quantity "3" is stored in the array PV(0).

Before shifting to the fifth control cycle, each element of the array PV(i) is shifted to the right by one frame. Then, when the process proceeds to the fifth control cycle, the reception sequence number RcvNO is incremented to 5, and the physical quantity "5" transmitted when the transmission sequence number SndNO is 2 is received. At this time, a position where the physical quantity is stored is the position of the array PV(0) from [RcvNO] 5 - [SndNO] 2 - [minimum value of the number of delay periods] 3 = 0. Therefore, the received physical quantity "5" is stored in the array PV(0).

Similarly, before shifting to the sixth control cycle, each element of the array PV(i) is shifted to the right by one frame. Then, when the process proceeds to the sixth control cycle, the reception sequence number RcvNO is incremented to 6, and the physical quantity "7" transmitted when the transmission sequence number SndNO is 3 is received. At this time, a physical quantity storage position becomes the position of the array PV(0) from [RcvNO] 6 - [SndNO] 3 - [minimum value of the number of delay periods] 3 = 0. Therefore, the received physical quantity "7" is stored in the array PV(0).

At the sixth control cycle, the control unit 11 generates a control signal on the basis of the physical quantity "3" stored in the array PV(2) serving as the storage position for control and the command value, and the generated control signal is transmitted to the target device 20. Similarly, a control signal generated based on the physical quantity "5" stored in the array PV(2) and the command value is transmitted to the target device 20 at the seventh control cycle, and a control signal generated based on the physical quantity "7" stored in the array PV(2) and the command value is transmitted to the target device 20 at the eighth control cycle.

In Fig. 3B, since the number of delay periods is 4, when the reception sequence number RcvNO corresponding to the fifth control cycle becomes 5, the physical quantity "3" transmitted when the transmission sequence number SndNO is 1 is received. At this time, a position where the physical quantity is stored is the position of the array PV(1) from [RcvNO] 5 - [SndNO] 1 - [minimum value of the number of delay periods] 3 = 1. Therefore, the received physical quantity "3" is stored in the array PV(1).

As described above, when the number of delay periods is 4, a position where the received physical quantity is stored is the position of the array PV(1), which is different from the processing content executed when the number of delay periods where a position where the received physical quantity is stored is the position of the array PV(o) is 3.

On the other hand, at the sixth to eighth control cycles, the control signals are generated using the physical quantities "3", "5", and "7" stored in the array PV(2) serving as the storage position for control, which is the same as the processing content executed when the number of delay periods is 3.

In Fig. 3C, since the number of delay periods is 5, when the reception sequence number RcvNO corresponding to the sixth control cycle is 6, the physical quantity "3" transmitted when the transmission sequence number SndNO is 1 is received. At this time, a position where the physical quantity is stored is the position of the array PV(2) from [RevNO] 6 - [SndNO] 1 - [minimum value of the number of delay periods] 3 = 2. Therefore, the received physical quantity "3" is stored in the array PV(2).

As described above, when the number of delay periods is 5, a position where the received physical quantity is stored is the position of the array PV(2), which is different from the processing content executed when the number of delay periods where a position where the received physical quantity is stored is the position of the array PV(0) is 3.

On the other hand, at the sixth to eighth control cycles, the control signals are generated using the physical quantities "3", "5", and "7" stored in the array PV(2) serving as the storage position for control, which is the same as the processing content executed when the number of delay periods is 3 or 4.

That is, even if the number of delay periods constantly varies from the minimum value of 3 to the maximum value of 5, the control signals generated at the sixth and subsequent control cycles are unified to the contents based on the physical quantities rearranged in the order of the transmission sequence number SndNO. Therefore, even in a case where the number of delay periods varies, it is possible to avoid the influence of data variation due to the variation and to obtain stable control performance.

Note that in a case where the physical quantity is not stored in the array PV(2) at the time of generating the control signal, for example, the physical quantity used in the previous control cycle and the oldest physical quantity (having the largest subscript) among the physical quantities stored in the current array PV(i) may be used to perform interpolation to generate a physical quantity used at the current control cycle.

Furthermore, in the processing description exemplified above, it is assumed that the processing on a transmission side and the processing on a reception side of the physical quantity are started at the same time, but the start of the processing may be shifted between the transmission side and the reception side. In consideration of such a situation, the number of elements of the array PV(i) may be secured to be larger than the standard number of elements. The standard number of elements is a value obtained by adding 1 to a value obtained by subtracting the minimum value of the number of delay periods from the maximum value of the number of delay periods described above.

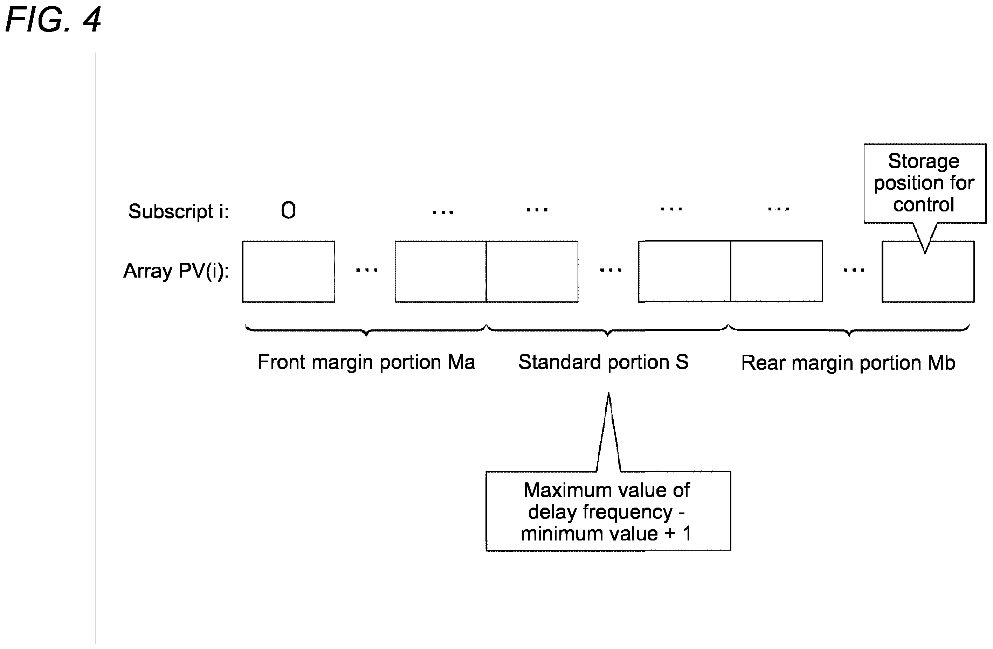

For example, as illustrated in Fig. 4, the array PV(i) may be configured by adding an array of a front margin portion Ma and an array of a rear margin portion Mb before and after an array of a standard portion S including the standard number of elements. In a case where the array PV(i) is configured in this manner, it is preferable to set the storage position for control to a position where a subscript of the array is maximized.

In a case where the array PV(i) has the configuration of Fig. 4, when the processing on the transmission side and the processing on the reception side are simultaneously started, the physical quantity is stored only in the array of the standard portion S. On the other hand, when the processing on the transmission side is started earlier, apparent dead time is shortened, and the physical quantity is also stored in the array of the front margin portion Ma. Then, when the processing on the reception side is started earlier, the apparent dead time becomes longer, and the physical quantity is also stored in the array of the rear margin portion Mb.

The number of elements of the front margin portion Ma and the rear margin portion Mb is preferably set in consideration of a range in which the timing to start the processing may be shifted between the transmission side and the reception side. Only one of the front margin portion Ma and the rear margin portion Mb may be provided without providing both of the front margin portion Ma and the rear margin portion Mb.

Furthermore, after the front margin portion Ma and the rear margin portion Mb are provided, the number of respective elements may be changed for each operation of the control target. For example, at the storage positions of the front margin portion Ma and the rear margin portion Mb, a range of the storage positions where the physical quantities are not stored at the time of the previous operation may be determined to be an unnecessary range, and the storage positions of the unnecessary range may be removed from the margin portions at the time of the next operation.

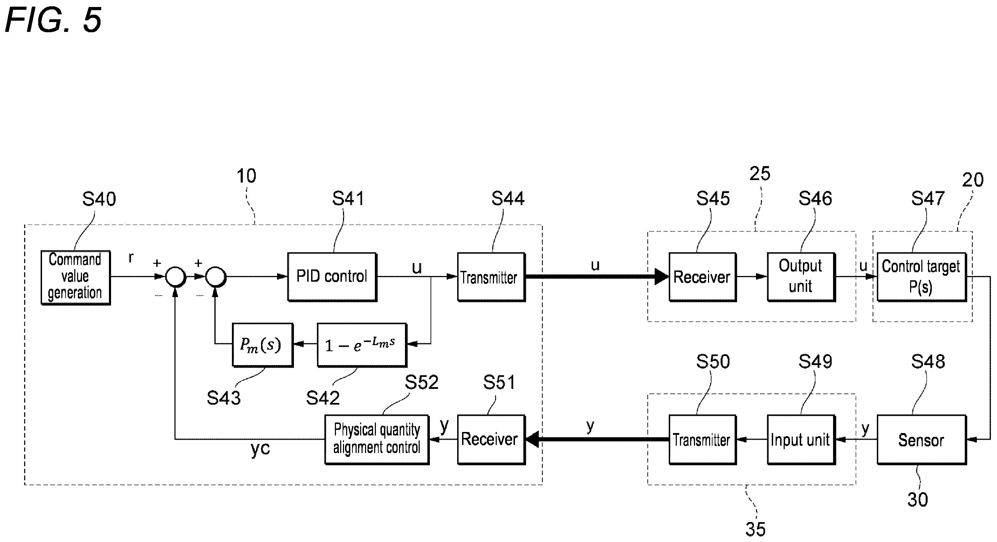

Fig. 5 is a control block diagram of the control system 100 according to the embodiment. Hereinafter, a case where the position of the movable part of the target device 20 is controlled by the control device 10 will be described.

First, the control device 10 generates a command value r (S40). In this example, the command value r is a value related to a position. The command value r is input to PID control, and a control signal u representing a thrust is output from the PID control (S41). Note that although a feedforward control block is omitted in the drawing, the feedforward control block may be included as a control block, and for example, model following type two-degree-of-freedom control may be applied.

The control device 10 multiplies the control signal u by an element (1-e-Lms) related to dead time Lm (S42), inputs the control signal to a control target model Pm(s), and feeds back an output (S43) from the control target model Pm(s) to the PID control (S41). Here, S42 and S43 are processed by a Smith compensator. The control target model Pm(s) is a model of an equation of motion followed by the movable part of the target device 20, and may be, for example, a model derived on the basis of an equation of motion established between a thrust applied to the movable part, and an inertial force and a frictional force. For example, {1/(Jm × s + Cm)s} can be used as the control target model Pm(s). Jm represents a model value of an inertia coefficient, Cm represents a model value of a viscous friction coefficient, and s represents a Laplace operator.

Subsequently, the control signal u output from the PID control is transmitted toward a control target P(s) (S44), and is received by the motor driver 25 after a time delay e-Ls occurs by dead time L (S45).

The motor driver 25 outputs the received control signal u to the control target P(s) (S46), and a servomotor of the control target P(s) is controlled by the thrust that is the control signal u (S47). Here, the control target may be a part (for example, the movable part) or all of the target device 20. The control target P(s) is a model of a motion equation followed by the movable part of the target device 20, and may be, for example, a model derived on the basis of a motion equation established between a thrust applied to the movable part, and an inertial force and a frictional force. For example, {1/(J × s + C)s} can be used as the control target P(s). J represents a value of an inertia coefficient, C represents a value of a viscous friction coefficient, and s represents a Laplace operator.

Subsequently, a position y, which is a physical quantity of the control target P(s), is read by the sensor 30 (S48), and the position y, which is the read physical quantity, is input to the sensor driver 35 (S49) and transmitted to the control device 10 (S50).

The position y, which is the physical quantity transmitted from the sensor driver 35, is received by the control device 10 after the time delay e-Ls occurs by the dead time L (S51).

The control device 10 stores the position y, which is the received physical quantity, in the array PV(i) as described above to align the physical quantities, and executes physical quantity alignment control of outputting a position yc, which is the physical quantity stored in the storage position for control of the array PV(i) (S52).

The control device 10 feeds back the position yc output by the physical quantity alignment control to the PID control (S41).

The control device 10 performs control such that the position y, which is a physical quantity, follows the command value r by repeating such control for each control cycle.

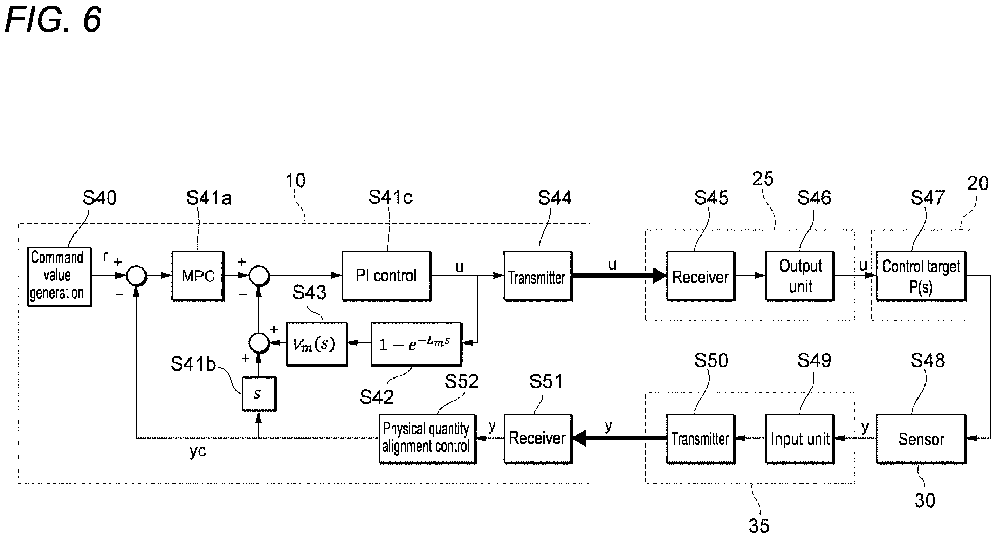

Here, model predictive control (MPC) may be applied to the control device 10 illustrated in Fig. 5. The MPC performs the model predictive control using a dynamic characteristic model indicating a relationship between the control signal u and the physical quantity y, and the command position r. Fig. 6 illustrates control blocks of the control system 100 in a case where the MPC is applied.

The configuration of the control device 10 illustrated in Fig. 6 is different from the configuration of the control device 10 illustrated in Fig. 5 in that, instead of the PID control (S41) in Fig. 5, PI control (S41c) is adopted, MPC (S41a) is newly provided on an input side of the PI control (S41c), and a differentiator S41b that converts a position yc, which is a physical quantity fed back to the PI control (S41c), into a speed is further provided. Furthermore, the difference is that the model of S43 is changed from the model Pm(s) for controlling the position in Fig. 5 to a model Vm(s) for controlling a speed. For example, {1/(Jm × s + Cm)} can be used as Vm(s). Other constituent elements illustrated in Fig. 6 are the same as the constituent elements in Fig. 5, and thus the description thereof will be omitted.

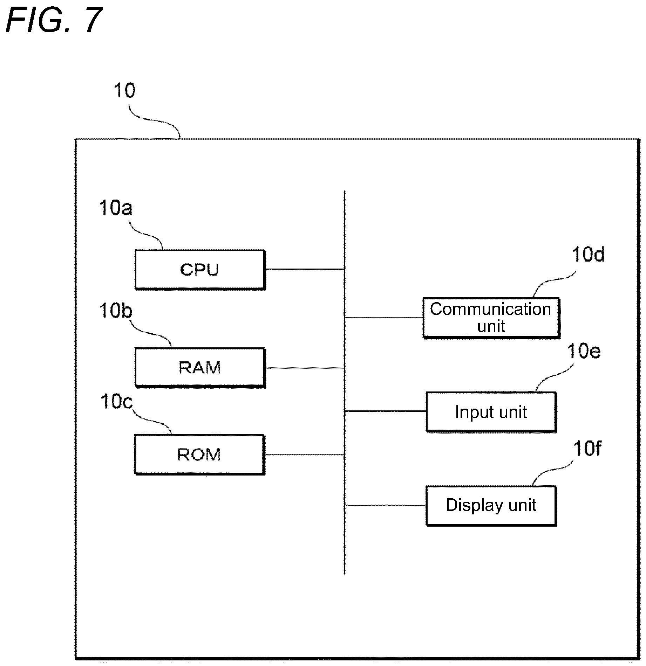

Fig. 7 is a diagram illustrating a physical configuration of the control device 10 according to the embodiment. The control device 10 includes a central processing unit (CPU) 10a corresponding to an arithmetic unit, a random access memory (RAM) 10b corresponding to a storage unit, a read only memory (ROM) 10c corresponding to a storage unit, a communication unit 10d, an input unit 10e, and a display unit 10f. These components are connected via a bus so as to be able to transmit and receive data to and from each other. Note that, in the present example, a case where the control device 10 includes one computer will be described, but the control device 10 may be realized by combining a plurality of computers. Furthermore, the configuration illustrated in Fig. 7 is an example, and the control device 10 may have a configuration other than these or may not have some of these configurations.

The CPU 10a executes a program stored in the RAM 10b or the ROM 10c, and functions as a control unit that performs various types of control and calculation and processing of data. For example, the CPU 10a executes a program (control program) for controlling the target device 20. Furthermore, the CPU 10a receives various data from the input unit 10e and the communication unit 10d, and displays a calculation result of the data on the display unit 10f or stores the calculation result in the RAM 10b.

The RAM 10b can rewrite data in the storage unit, and may be configured by, for example, a semiconductor storage element. The RAM 10b may store, for example, a program executed by the CPU 10a and data used in the program. Note that these are examples, and data other than these may be stored in the RAM 10b, or some of these may not be stored.

The ROM 10c is capable of reading data in the storage unit, and may be configured by, for example, a semiconductor storage element. The ROM 10c may store, for example, a control program and data that is not rewritten.

The communication unit 10d is an interface that connects the control device 10 to another device. The communication unit 10d may be connected to a communication network such as a LAN.

The input unit 10e receives data input from a user, and may include, for example, a keyboard and a touch panel.

The display unit 10f visually displays a calculation result by the CPU 10a, and may be configured by, for example, a liquid crystal display (LCD). The display unit 10f may display, for example, the control signal and the physical quantity in time series.

The control program may be provided by being stored in a computer-readable storage medium such as the RAM 10b or the ROM 10c, or may be provided via a communication network connected by the communication unit 10d. In the control device 10, the various operations described above are realized by the CPU 10a executing the control program. Note that these physical configurations are merely examples, and may not necessarily be independent configurations. For example, the control device 10 may include a large-scale integration (LSI) in which the CPU 10a, the RAM 10b, and the ROM 10c are integrated.

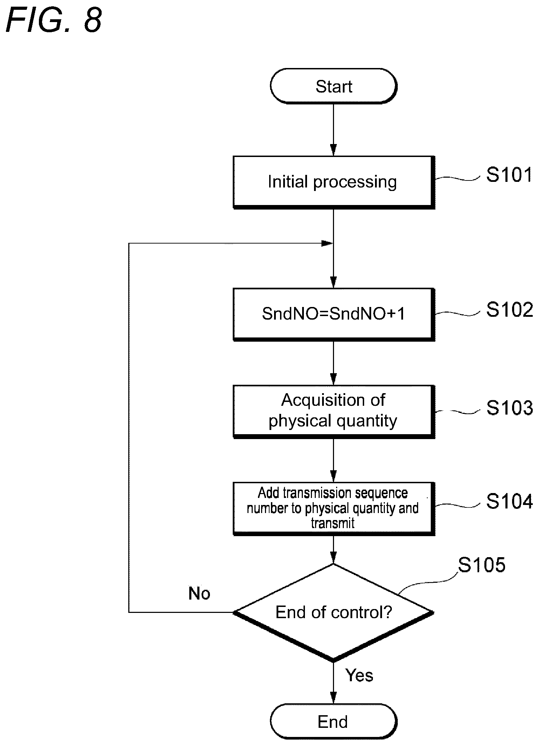

Next, an example of control processing executed by the sensor driver 35 of the control system 100 according to the embodiment will be described with reference to Fig. 8.

First, the sensor driver 35 executes initial processing (step S101). The initial processing includes, for example, initializing the transmission sequence number SndNO to 0.

Subsequently, the sensor driver 35 starts control loop processing. The control loop processing is processing repeatedly executed at each predetermined control cycle (processing from step S102 to step S105 described later).

In the control loop processing, first, the sensor driver 35 increments the transmission sequence number SndNO (step S102).

Subsequently, the sensor driver 35 acquires the physical quantity y measured by the sensor 30 (step S103).

Subsequently, the sensor driver 35 adds the transmission sequence number SndNO incremented in step S102 to the data of the physical quantity y acquired in step S103, and transmits the data to the control device 10 (step S104).

Subsequently, the sensor driver 35 determines whether or not to end the control loop processing (step S105). In a case where this determination is NO (step S105; NO), the process proceeds to step S102, and in a case where the determination is YES (step S105; YES), the control loop processing is ended and the present process is ended.

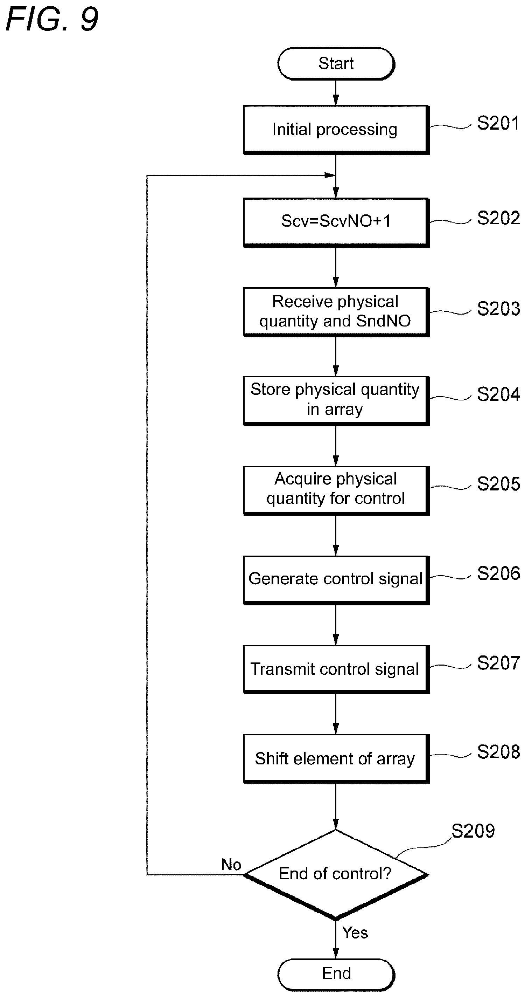

Next, an example of control processing executed by the control device 10 of the control system 100 according to the embodiment will be described with reference to Fig. 9.

First, the control device 10 executes initial processing (step S201). The initial processing includes, for example, initializing the reception sequence number RcvNO to 0, determining the number of elements of the array PV(i), and initializing each element of the array PV(i) to NA.

Subsequently, the control device 10 starts control loop processing. The control loop processing is processing repeatedly executed at each predetermined control cycle (processing from step S202 to step S209 described later).

In the control loop processing, first, the control device 10 increments the reception sequence number RcvNO (step S202).

Subsequently, the control device 10 receives the physical quantity y and the transmission sequence number SndNO transmitted by the sensor driver 35 in step S104 (step S203).

Subsequently, the control device 10 stores the physical quantity y received in step S203 in the specific position of the array PV(i) (step S204). The specific position of the array PV(i) can be determined based on the transmission sequence number SndNO, the reception sequence number RcvNO, and the minimum value of the number of delay periods.

Subsequently, the control device 10 acquires the physical quantity yc for control from the storage position for control of the array PV(i) (step S205). The storage position for control of the array PV(i) can be determined based on the minimum value and the maximum value of the number of delay periods.

Subsequently, the control device 10 generates the control signal u based on the physical quantity yc for control acquired in step S205 and the command value r (step S206).

Subsequently, the control device 10 transmits the control signal u generated in step S206 to the target device 20 (step S207).

Subsequently, the control device 10 shifts each element of the array PV(i) to the right side (the side where the subscript is large) by one frame (step S208).

Subsequently, the control device 10 determines whether or not to end the control loop processing (step S209). In a case where this determination is NO (step S209; NO), the process proceeds to step S202, and in a case where the determination is YES (step S209; YES), the control loop processing is ended and the present process is ended.

### [Simulation results]

Results of a simulation performed to verify the effect of the control system 100 according to the embodiment will be described below.

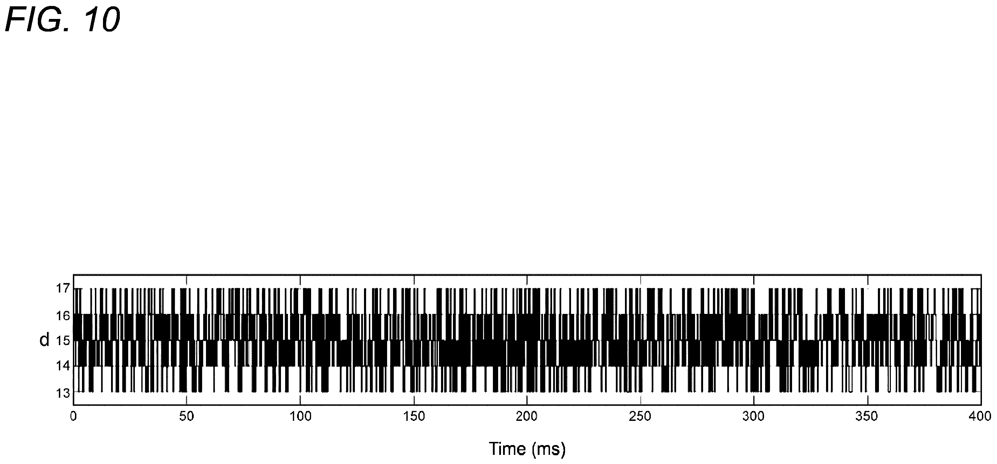

Conditions at the time of simulation are as follows. An inertial mass is 10 [kg], a viscous friction coefficient is 0 [Ns/m], and a control cycle is 0.25 [ms]. The position to be the command value monotonously increases from the origin to 100 [mm] from the time 10 [ms] to 250 [ms], and the maximum acceleration at the time of movement is 10,000 [mm/s2]. The number of delay periods of the control signal u or the number of delay periods d of the physical quantity y is 13 to 17 as illustrated in Fig. 10, and an average of the number of delay periods d is 15. In the graph of the drawing, a vertical axis represents the number of delay periods d, and a horizontal axis represents elapsed time [ms]. Furthermore, in this simulation, it is assumed that no model error and no disturbance occur.

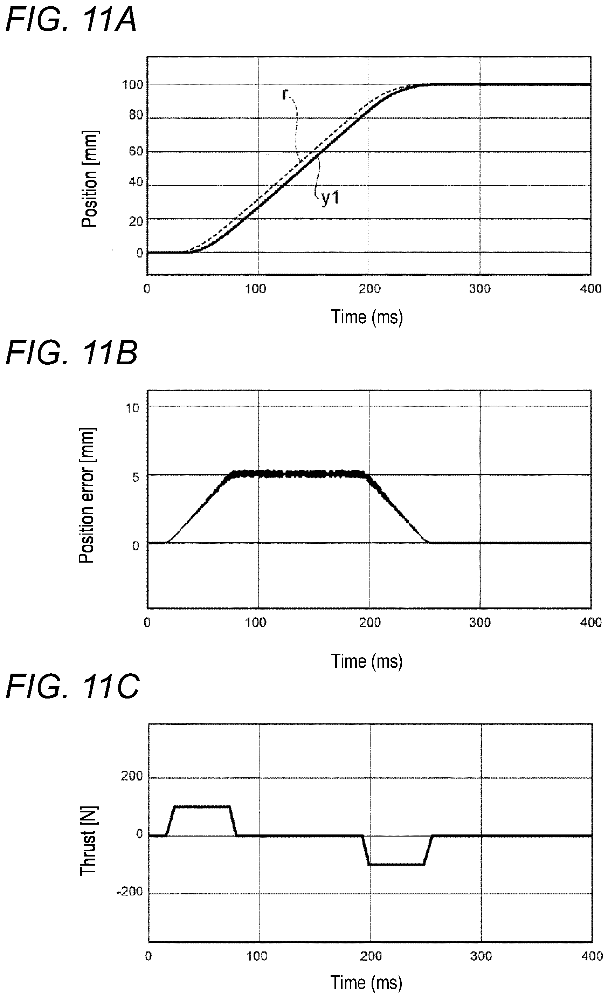

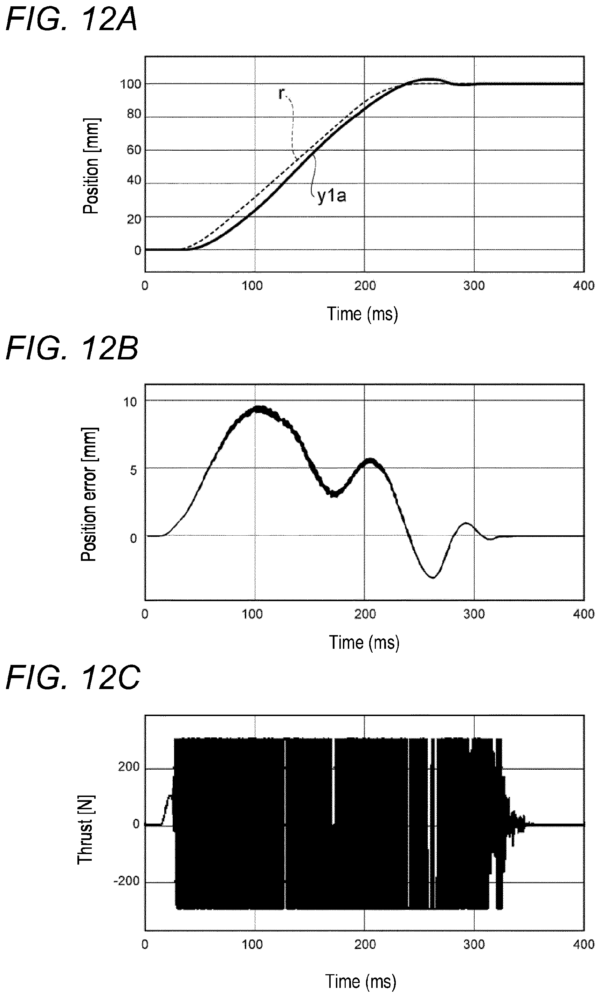

Simulation results for the control device 10 according to the embodiment are illustrated in Figs. 11A to 11C, and simulation results for the control device according to a comparative example are illustrated in Figs. 12A to 12C. In the control device according to the comparative example, the physical quantity alignment control (S52) is omitted in the control blocks of the control device 10 illustrated in Fig. 5, and a position y1a of the target device 20 received from the sensor driver 35 in the comparative example is directly fed back to the PID control.

Here, in the simulation for the control device 10 according to the embodiment, the dead time period of the Smith compensator is set to 32, and in the simulation for the control device according to the comparative example, the dead time period of the Smith compensator is set to 30. The dead time period 32 of the embodiment is obtained by adding 15, which is an average of the number of delay periods d of the control signal u, and 17, which is the maximum value of the number of delay periods d of the physical quantity y. The dead time period 30 of the comparative example is obtained by doubling 15, which is an average of the number of delay periods d, to 1 round trip (transmission and reception).

Fig. 11A is a diagram illustrating a position y1 of the target device 20 controlled by the control device 10 according to the embodiment. In the drawing, the position y1 of the target device 20 is indicated by a solid line, and a command value r is indicated by a broken line. Fig. 11B is a diagram illustrating an error (deviation) between the position y1 controlled by the control device 10 according to the embodiment and the command value r. Fig. 11C is a diagram illustrating a thrust controlled by the control device 10 according to the embodiment. The thrust is a control signal transmitted from the control device 10 to the target device 20.

Fig. 12A is a diagram illustrating a position y1a of the target device controlled by the control device according to the comparative example. In the drawing, the position y1a of the target device 20 is indicated by a solid line, and a command value r is indicated by a broken line. Fig. 12B is a diagram illustrating an error (deviation) between the position y1a controlled by the control device according to the comparative example and the command value r. Fig. 12C is a diagram illustrating a thrust controlled by the control device according to the comparative example.

In comparison between the embodiment and the comparative example, in the comparative example illustrated in Figs. 12A to 12C, a large noise is applied to the position y1a, which is a physical quantity, and the thrust, which is a control signal generated on the basis of the position y1a which is the physical quantity, vibrates violently. That is, in the comparative example, the target position can be settled, but the thrust saturation is repeated, and the control cannot be normally performed.

On the other hand, in the embodiment illustrated in Figs. 11A to 11C, by performing the physical quantity alignment control (S52), there is no vibration of the thrust, and favorable control can be performed.

Here, in the above-described embodiment, the physical quantity alignment control (S52) is performed only for the delay of the physical quantity y received by the control device 10 from the sensor driver 35, but the alignment control similar to the physical quantity alignment control (S52) may be further performed for the delay of the control signal u received by the motor driver 25 from the control device 10.

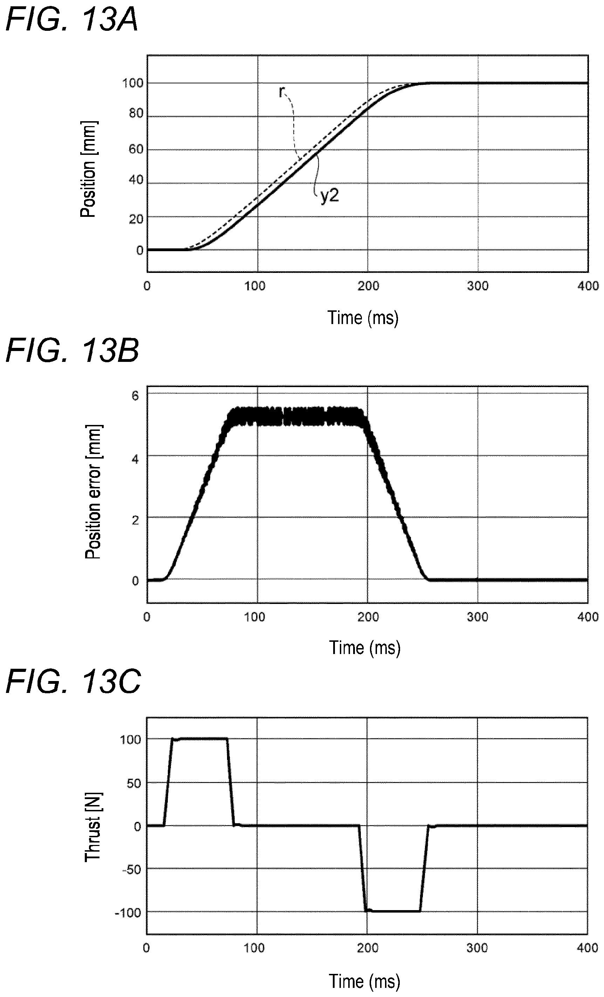

Simulation results in this modified example are illustrated in Figs. 13A to 13C. In the simulation for the modified example, the dead time period of the Smith compensator is set to 34. The dead time period 34 is obtained by adding 17, which is the maximum value of the number of delay periods d of the control signal u, and 17, which is the maximum value of the number of delay periods d of the physical quantity y. Other conditions at the time of the simulation are similar to those at the time of the simulation of the above-described embodiment.

When the embodiment is compared with the modified example, since the position errors in Figs. 11B and 13B and the graph ranges indicating the thrust in Figs. 11C and 13C are different from each other, it seems that there is a difference at a glance, but when the graph ranges are made uniform, there is almost no difference between the results of both. Therefore, as in the modified example, it is considered that the necessity of performing the alignment control is not so high even for the delay of the control signal u. Note that the maximum value (Fig. 11B) of the position error of the modified example is slightly larger than the maximum value (Fig. 13B) of the position error of the embodiment because the dead time period of the Smith compensator is longer in the modified example.

As described above, according to the control system 100 of the embodiment, it is possible to hold the array PV(i) determined based on the minimum value and the maximum value of the number of delay periods, receive the physical quantity y in each control cycle, increment the reception sequence number RcvNO, store the received physical quantity y in the storage position of the array PV(i) determined based on the transmission sequence number SndNO of the received physical quantity y, the reception sequence number RevNO, and the minimum value of the number of delay periods, generate the control signal u based on the physical quantity yc stored in the storage position for control of the array PV(i) and the command value r, transmit the control signal u to the target device 20, and shift each element of the array PV(i) one by one.

As a result, even if the number of delay periods becomes any of the minimum value to the maximum value, the control signal to be transmitted to the target device 20 after the maximum value of the number of delay periods can be generated on the basis of the physical quantity rearranged in the order of the transmission sequence number SndNO.

Therefore, according to the control system 100 according to the embodiment, even in a case where the number of delay periods varies, it is possible to avoid the influence of data variation associated with the variation in the number of delay periods and obtain stable control performance without using the clock function.

The embodiment described above is merely examples of the present invention in all respects. It goes without saying that various improvements and modifications can be made without departing from the scope of the present invention. That is, in practicing the present invention, a specific configuration according to the embodiment may be adopted as appropriate. Furthermore, the above-described embodiment is intended to facilitate understanding of the present invention, and are not intended to limit and interpret the present invention. Each element included in the embodiment and the arrangement, material, condition, shape, size, and the like thereof are not limited to those exemplified, and can be appropriately changed.

### DESCRIPTION OF SYMBOLS

- 10: control device
- 10a: CPU
- 10b: RAM
- 10c: ROM
- 10d: communication unit
- 10e: input unit
- 10f: display unit
- 11: control unit
- 12: transmitter
- 13: receiver
- 14: buffer unit
- 20: target device
- 25: motor driver
- 30: sensor
- 35: sensor driver
- 100: control system

## Claims

1. A control system (100) comprising:
a sensor (30) configured to measure a physical quantity of a target device (20) controlled based on a control signal;
a sensor driver (35) configured to add a transmission sequence number incremented for each control cycle to the physical quantity, and transmit the physical quantity; and
a control device (10) configured to transmit the control signal to the target device (20) based on the physical quantity and a command value, and perform feedback control,
wherein the control device (10) includes:
a receiver (13) configured to receive the physical quantity to which the transmission sequence number is added;
a buffer unit (14) configured to hold an array configured with a number of elements determined based on a maximum value of a number of delay periods with which the physical quantity is delayed and received in a control cycle;
a control unit (11) configured to generate the control signal based on the physical quantity and the command value; and
a transmitter (12) configured to transmit the generated control signal to the target device (20), and
wherein the control unit (11) is configured to:
increment a reception sequence number, which is initialized to 0 before starting processing, for each control cycle,
store the physical quantity at a storage position of an array determined based on the transmission sequence number added to the received physical quantity and the reception sequence number,
generate the control signal based on the physical quantity stored in a storage position for control among storage positions of the array, and the command value, and
shift each element stored in the array one by one in a direction in which an index value is large after the control signal is transmitted by the transmitter.

2. The control system (100) according to claim 1, wherein the number of elements is a value obtained by adding 1 to a value obtained by subtracting a minimum value of the number of delay periods from a maximum value of the number of delay periods.

3. The control system (100) according to claim 1, wherein the storage position of the array is a storage position corresponding to a value obtained by further subtracting a minimum value of the number of delay periods from a value obtained by subtracting the transmission sequence number from the reception sequence number.

4. The control system (100) according to claim 1, wherein the storage position for control of the array is a storage position corresponding to a value obtained by subtracting a minimum value of the number of delay periods from a maximum value of the number of delay periods.

5. The control system (100) according to any one of claims 1 to 4, wherein
the control device (10) further includes
a Smith compensator based on a model of the target device and dead time, and
the dead time determined based on a maximum value of the number of delay periods is set in the Smith compensator.

6. A control method executed by a control device (10) configured to transmit a control signal to a target device (20) based on a physical quantity of the target device (20) measured by a sensor (30) and a command value, and perform feedback control, the control method comprising:
receiving the physical quantity to which a transmission sequence number incremented for each control cycle is added in a sensor driver (35);
holding an array configured with a number of elements determined based on a maximum value of a number of delay periods with which the physical quantity is delayed and received in a control cycle;
generating the control signal based on the physical quantity and the command value,; and
transmitting the generated control signal to the target device (20),
wherein the generating the control signal includes:
incrementing a reception sequence number, which is initialized to 0 before starting processing, for each control cycle;
storing the physical quantity at a storage position of an array determined based on the transmission sequence number added to the received physical quantity and the reception sequence number; and
generating the control signal based on the physical quantity stored in a storage position for control among storage positions of the array, and the command value, and
wherein each element stored in the array is shifted one by one in a direction in which an index value is large after the control signal is transmitted.

7. A control program that causes a control device (10) configured to transmit a control signal to a target device (20) based on a physical quantity of the target device (20) measured by a sensor (30) and a command value, and perform feedback control to function as:
a receiver (13) configured to receive the physical quantity to which a transmission sequence number incremented for each control cycle is added in a sensor driver (35);
a buffer unit (14) configured to hold an array configured with a number of elements determined based on a maximum value of a number of delay periods with which the physical quantity is delayed and received in a control cycle;
a control unit (11) configured to generate the control signal based on the physical quantity and the command value; and
a transmitter (12) configured to transmit the generated control signal to the target device (20),
wherein the control unit (11) is configured to:
increment a reception sequence number, which is initialized to 0 before starting processing, for each control cycle,
store the physical quantity at a storage position of an array determined based on the transmission sequence number added to the received physical quantity and the reception sequence number,
generate the control signal based on the physical quantity stored in a storage position for control among storage positions of the array, and the command value, and
shift each element stored in the array one by one in a direction in which an index value is large after the control signal is transmitted by the transmitter (12).

## Patentansprüche

1. Steuersystem (100), umfassend:
einen Sensor (30), der konfiguriert ist, um eine physikalische Größe einer Zielvorrichtung (20) zu messen, die basierend auf einem Steuersignal gesteuert wird;
einen Sensortreiber (35), der konfiguriert ist, um eine Übertragungssequenznummer, die für jeden Steuerzyklus inkrementiert wird, zu der physikalischen Größe hinzuzufügen und die physikalische Größe zu übertragen; und
eine Steuervorrichtung (10), die konfiguriert ist, um das Steuersignal basierend auf der physikalischen Größe und einem Befehlswert an die Zielvorrichtung (20) zu übertragen und eine Rückkopplungssteuerung durchzuführen,
wobei die Steuervorrichtung (10) umfasst:
einen Empfänger (13), der konfiguriert ist, um die physikalische Größe zu empfangen, zu der die Übertragungssequenznummer hinzugefügt wird;
eine Puffereinheit (14), die konfiguriert ist, um ein Array zu halten, das mit einer Anzahl von Elementen konfiguriert ist, die basierend auf einem Maximalwert einer Anzahl von Verzögerungsperioden bestimmt wird, mit denen die physikalische Größe in einem Steuerzyklus verzögert und empfangen wird;
eine Steuereinheit (11), die konfiguriert ist, um das Steuersignal basierend auf der physikalischen Größe und dem Befehlswert zu erzeugen; und
einen Sender (12), der konfiguriert ist, um das erzeugte Steuersignal an die Zielvorrichtung (20) zu übertragen, und
wobei die Steuereinheit (11) konfiguriert ist, um:
eine Empfangssequenznummer, die vor Beginn der Verarbeitung auf 0 initialisiert wird, für jeden Steuerzyklus zu inkrementieren,
die physikalische Größe an einer Speicherposition eines Arrays zu speichern, die basierend auf der Übertragungssequenznummer bestimmt wird, die zu der empfangenen physikalischen Größe und der Empfangssequenznummer hinzugefügt wird,
das Steuersignal basierend auf der physikalischen Größe, die in einer Speicherposition zur Steuerung unter Speicherpositionen des Arrays gespeichert ist, und dem Befehlswert zu erzeugen, und
jedes Element, das in dem Array gespeichert ist, nacheinander in eine Richtung zu verschieben, in der ein Indexwert groß ist, nachdem das Steuersignal durch den Sender übertragen wurde.

2. Steuersystem (100) nach Anspruch 1, wobei die Anzahl von Elementen ein Wert ist, der durch Addieren von 1 zu einem Wert erhalten wird, der durch Subtrahieren eines Minimalwerts der Anzahl von Verzögerungsperioden von einem Maximalwert der Anzahl von Verzögerungsperioden erhalten wird.

3. Steuersystem (100) nach Anspruch 1, wobei die Speicherposition des Arrays eine Speicherposition ist, die einem Wert entspricht, der durch weiteres Subtrahieren eines Minimalwerts der Anzahl von Verzögerungsperioden von einem Wert erhalten wird, der durch Subtrahieren der Übertragungssequenznummer von der Empfangssequenznummer erhalten wird.

4. Steuersystem (100) nach Anspruch 1, wobei die Speicherposition zum Steuern des Arrays eine Speicherposition ist, die einem Wert entspricht, der durch Subtrahieren eines Minimalwerts der Anzahl von Verzögerungsperioden von einem Maximalwert der Anzahl von Verzögerungsperioden erhalten wird.

5. Steuersystem (100) nach einem der Ansprüche 1 bis 4, wobei
die Steuervorrichtung (10) ferner umfasst
einen Smith-Kompensator basierend auf einem Modell der Zielvorrichtung und Totzeit, und
die Totzeit, die basierend auf einem Maximalwert der Anzahl von Verzögerungsperioden bestimmt wird, in dem Smith-Kompensator eingestellt wird.

6. Steuerverfahren, das durch eine Steuervorrichtung (10) ausgeführt wird, die konfiguriert ist, um ein Steuersignal basierend auf einer physikalischen Größe der Zielvorrichtung (20), die durch einen Sensor (30) gemessen wird, und einem Befehlswert an eine Zielvorrichtung (20) zu übertragen und eine Rückkopplungssteuerung durchzuführen, wobei das Steuerverfahren umfasst:
Empfangen der physikalischen Größe, zu der eine Übertragungssequenznummer, die für jeden Steuerzyklus inkrementiert wird, in einem Sensortreiber (35) hinzugefügt wird;
Halten eines Arrays, das mit einer Anzahl von Elementen konfiguriert ist, die basierend auf einem Maximalwert einer Anzahl von Verzögerungsperioden bestimmt wird, mit denen die physikalische Größe in einem Steuerzyklus verzögert und empfangen wird;
Erzeugen des Steuersignals basierend auf der physikalischen Größe und dem Befehlswert; und
Übertragen des erzeugten Steuersignals an die Zielvorrichtung (20),
wobei das Erzeugen des Steuersignals umfasst:
Inkrementieren einer Empfangssequenznummer, die vor Beginn der Verarbeitung auf 0 initialisiert wird, für jeden Steuerzyklus;
Speichern der physikalischen Größe an einer Speicherposition eines Arrays, die basierend auf der Übertragungssequenznummer bestimmt wird, die zu der empfangenen physikalischen Größe und der Empfangssequenznummer hinzugefügt wird; und
Erzeugen des Steuersignals basierend auf der physikalischen Größe, die in einer Speicherposition zur Steuerung unter Speicherpositionen des Arrays gespeichert ist, und dem Befehlswert, und
wobei jedes Element, das in dem Array gespeichert ist, nacheinander in eine Richtung verschoben wird, in der ein Indexwert groß ist, nachdem das Steuersignal übertragen wurde.

7. Steuerprogramm, das eine Steuervorrichtung (10) veranlasst, die konfiguriert ist, um ein Steuersignal basierend auf einer physikalischen Größe der Zielvorrichtung (20), die durch einen Sensor (30) gemessen wird, und einem Befehlswert an eine Zielvorrichtung (20) zu übertragen und eine Rückkopplungssteuerung durchzuführen, um zu funktionieren als:
ein Empfänger (13), der konfiguriert ist, um die physikalische Größe zu empfangen, zu der eine Übertragungssequenznummer, die für jeden Steuerzyklus inkrementiert wird, in einem Sensortreiber (35) hinzugefügt wird;
eine Puffereinheit (14), die konfiguriert ist, um ein Array zu halten, das mit einer Anzahl von Elementen konfiguriert ist, die basierend auf einem Maximalwert einer Anzahl von Verzögerungsperioden bestimmt wird, mit denen die physikalische Größe in einem Steuerzyklus verzögert und empfangen wird;
eine Steuereinheit (11), die konfiguriert ist, um das Steuersignal basierend auf der physikalischen Größe und dem Befehlswert zu erzeugen; und
einen Sender (12), der konfiguriert ist, um das erzeugte Steuersignal an die Zielvorrichtung (20) zu übertragen,
wobei die Steuereinheit (11) konfiguriert ist, um:
eine Empfangssequenznummer, die vor Beginn der Verarbeitung auf 0 initialisiert wird, für jeden Steuerzyklus zu inkrementieren,
die physikalische Größe an einer Speicherposition eines Arrays zu speichern, die basierend auf der Übertragungssequenznummer bestimmt wird, die zu der empfangenen physikalischen Größe und der Empfangssequenznummer hinzugefügt wird,
das Steuersignal basierend auf der physikalischen Größe, die in einer Speicherposition zur Steuerung unter Speicherpositionen des Arrays gespeichert ist, und dem Befehlswert zu erzeugen, und
jedes Element, das in dem Array gespeichert ist, nacheinander in eine Richtung zu verschieben, in der ein Indexwert groß ist, nachdem das Steuersignal durch den Sender (12) übertragen wurde.

## Revendications

1. Un système de contrôle (100) comprenant :
un capteur (30) configuré pour mesurer une quantité physique d'un dispositif cible (20) contrôlé sur la base d'un signal de contrôle ;
un pilote de capteur (35) configuré pour ajouter à la quantité physique un numéro de séquence d'émission incrémenté à chaque cycle de contrôle, et émettre la quantité physique ; et
un dispositif de contrôle (10) configuré pour émettre le signal de contrôle vers le dispositif cible (20) sur la base de la quantité physique et d'une valeur de commande, et effectuer un contrôle en retour,
dans lequel le dispositif de contrôle (10) comprend :
un récepteur (13) configuré pour recevoir la quantité physique à laquelle a été ajouté le numéro de séquence d'émission ;
une unité tampon (14) configurée pour conserver un tableau configuré avec un nombre d'éléments déterminé sur la base d'une valeur maximale d'un nombre de périodes de retard dont la quantité physique est retardée et reçue dans un cycle de contrôle ;
une unité de contrôle (11) configurée pour générer le signal de contrôle sur la base de la quantité physique et de la valeur de commande ; et
un émetteur (12) configuré pour émettre le signal de contrôle généré vers le dispositif cible (20), et
dans lequel l'unité de contrôle (11) est configurée pour :
incrémenter à chaque cycle de contrôle un numéro de séquence de réception qui est initialisé à 0 avant de commencer le traitement,
stocker la quantité physique à une position de stockage d'un tableau déterminée sur la base du numéro de séquence d'émission ajouté à la quantité physique reçue et du numéro de séquence de réception,
générer le signal de contrôle sur la base de la quantité physique stockée à une position de stockage pour contrôle parmi les positions de stockage du tableau, et la valeur de commande, et
décaler un par un chaque élément stocké dans le tableau dans un sens dans lequel une valeur d'indice est plus grande après que le signal de contrôle a été émis par l'émetteur.

2. Le système de contrôle (100) selon la revendication 1, dans lequel le nombre d'éléments est une valeur obtenue en ajoutant 1 à une valeur obtenue en soustrayant une valeur minimale du nombre de périodes de retard d'une valeur maximale du nombre de périodes de retard.

3. Le système de contrôle (100) selon la revendication 1, dans lequel la position de stockage du tableau est une position de stockage correspondant à une valeur obtenue en soustrayant en outre une valeur minimale du nombre de périodes de retard d'une valeur obtenue en soustrayant le numéro de séquence d'émission du numéro de séquence de réception.

4. Le système de contrôle (100) selon la revendication 1, dans lequel la position de stockage pour le contrôle du tableau est une position de stockage correspondant à une valeur obtenue en soustrayant une valeur minimale du nombre de périodes de retard d'une valeur maximale du nombre de périodes de retard.

5. Le système de contrôle (100) selon l'une des revendications 1 à 4, dans lequel :
le dispositif de contrôle (10) comprend en outre :
un compensateur Smith basé sur un modèle du dispositif cible et un temps mort, et
le temps mort, déterminé sur la base d'une valeur maximale du nombre de périodes de retard, est paramétré dans le compensateur Smith.

6. Un procédé de contrôle exécuté par un dispositif de contrôle (10) configuré pour émettre un signal de contrôle vers un dispositif cible (20) sur la base d'une quantité physique du dispositif cible (20) mesurée par un capteur (30) et d'une valeur de commande, et effectuer un contrôle en retour, le procédé de contrôle comprenant :
la réception de la quantité physique à laquelle est ajouté dans un pilote de capteur (35) un numéro de séquence d'émission incrémenté à chaque cycle de contrôle ;
la conservation d'un tableau configuré avec un nombre d'éléments déterminé sur la base d'une valeur maximale d'un nombre de périodes de retard dont la quantité physique est retardée et reçue dans un cycle de contrôle ;
la génération du signal de contrôle sur la base de la quantité physique de la valeur de commande ; et
l'émission du signal de contrôle générée vers le dispositif cible (20),
dans lequel la génération du signal de contrôle comprend :
l'incrémentation à chaque cycle de contrôle d'un numéro de séquence de réception qui est initialisé à 0 avant de commencer le traitement,
le stockage de la quantité physique à une position de stockage d'un tableau déterminée sur la base du numéro de séquence d'émission ajouté à la quantité physique reçue et du numéro de séquence de réception,
la génération du signal de contrôle sur la base de la quantité physique stockée à une position de stockage pour contrôle parmi les positions de stockage du tableau, et la valeur de commande, et
dans lequel chaque élément stocké dans le tableau est décalé un par un dans un sens dans lequel une valeur d'indice est plus grande après que le signal de contrôle a été émis par l'émetteur.

7. Un programme de contrôle qui fait en sorte qu'un dispositif de contrôle (10) est configuré pour émettre vers un dispositif cible (20) un signal de contrôle basé sur une quantité physique du dispositif cible (20) mesurée par un capteur (30), et une valeur de commande, et effectuer un contrôle en retour pour faire fonction :
d'un récepteur (13) configuré pour recevoir la quantité physique à laquelle est ajouté dans un pilote de capteur (35) un numéro de séquence d'émission incrémenté à chaque cycle de contrôle ;
d'une unité tampon (14) configurée pour conserver un tableau configuré avec un nombre d'éléments déterminé sur la base d'une valeur maximale d'un nombre de périodes de retard dont la quantité physique est retardée et reçue dans un cycle de contrôle ;
d'une unité de contrôle (11) configurée pour générer le signal de contrôle sur la base de la quantité physique et de la valeur de commande ; et
d'une émetteur (12) configuré pour émettre le signal de contrôle généré vers le dispositif cible (20), et
dans lequel l'unité de contrôle (11) est configurée pour :
incrémenter à chaque cycle de contrôle un numéro de séquence de réception qui est initialisé à 0 avant de commencer le traitement,
stocker la quantité physique à une position de stockage d'un tableau déterminée sur la base du numéro de séquence d'émission ajouté à la quantité physique reçue et du numéro de séquence de réception,
générer le signal de contrôle sur la base de la quantité physique stockée à une position de stockage pour contrôle parmi les positions de stockage du tableau, et la valeur de commande, et
décaler un par un chaque élément stocké dans le tableau dans un sens dans lequel une valeur d'indice est plus grande après que le signal de contrôle a été émis par l'émetteur.
